# EUROPEAN PATENT SPECIFICATION

(11) **EP 3 488 965 B1**
(45) Date of publication and mention of the grant of the patent: **20.04.2022**
(21) Application number: 18207453.4
(22) Date of filing: 21.11.2018
(51) Int. Cl.: B23Q 1/76, B23B 29/16, B23B 31/10, B23B 13/00, B23Q 3/18

(54) **CENTERING DEVICE FOR BARS**
ZENTRIERVORRICHTUNG FÜR STANGEN
DISPOSITIF DE CENTRAGE POUR BARRES

(30) Priority: 23.11.2017 IT 201700134468
(43) Date of publication of application: 29.05.2019
(73) Proprietor: Top Automazioni S.R.L., 47824 Poggio Torriana (RN) (IT)
(72) Inventor: BARGELLINI, Nicola, 47824 Poggio Torriana (RN) (IT); RAMBERTI, Diego, 47863 Novafeltria (RN) (IT)
(74) Representative: Villanova, Massimo

(56) References cited:
- DE-A1- 4 122 948
- FR-A1- 2 319 446

## Description

### Background of the invention

The invention relates to a centering device for bars, in particular for bars which are fed to a machine tool and which, during processing, are rotated about its longitudinal axis.

Specifically, but not exclusively, the device in object can be usefully used for centering bars during the loading and/or unloading of the bars with respect to a lathe, for example a fixed head lathe.

In particular, reference is made to a centering device which can be arranged between a bar feeder and a machine tool (lathe) to keep the bar centered during processing between the feeder and the machine and limit the oscillation of the bar during the rotation of the same.

It is known to load a bar being processed on a lathe by means of a bar feeder. One of the problems of the prior art arises from the need to work bars of very different lengths from each other and from the constructive constraint determined by the various lengths of the spindles of the lathes. In fact, for very long bars being processed it is necessary to place the bar feeder at a certain distance from the lathe to recover the distance in the spindle necessary for machining. In this way, however, a gap is created, sometimes of considerable length, between the feeder and the lathe. It is known to fill this gap with a centering device which is positioned between the feeder and the lathe to facilitate centering of the bar and to reduce its oscillation.

FR 2319446 A1 discloses a centering device in which a guide assembly comprises three rolling members arranged around a centering axis with the possibility of assuming at least two configurations in which the rolling members are arranged at two different radial distances from the centering axis so as to rotatably support, in a selective way, two cylindrical bodies with different external diameters.

### Summary of the invention

An object of the invention is to improve devices of the prior art for centering bars fed to and/or discharged from a machine tool.

An advantage is to provide a centering device which can be adapted simply and rapidly to the diameter change of the bars being processed.

An advantage is to provide a centering device with high efficiency to keep the bar being machined centered between the bar feeder and the machine tool spindle and to reduce the oscillations of the rotating bar.

An advantage is to allow automatic centering of a bar-shaped bar support (bar adapter) which internally contains a bar and inside which the bar can slide.

An advantage is to simplify the operations of preparing the centering device with respect to the prior art.

An advantage is to provide a centering device that is constructively simple and economical.

An advantage is to provide a centering device which is versatile and adaptable to use with bars of different diameters.

An advantage is to give rise to a centering device usable both for bars to be machined, by placing the device in an inlet zone of the machine tool included between a bar loading apparatus and the machine tool, and for already machined bars, placing the device in an exit area of the machine tool between the machine tool and a bar unloading apparatus.

Such objects and advantages and others are achieved by a centering device according to one or more of the claims set forth below.

In one example, a centering device comprises at least two guide assemblies, axially spaced from each other along a centering axis, each of which in turn comprises at least three rolling members arranged around the centering axis to rotatably support a cylindrical body, each rolling member being positioned in such a way as to regulate its radial distance from the centering axis and allow supporting cylindrical bodies of different diameters. Each rolling member may, in particular, carry a pin which slides within a groove formed in an adjustment body which can rotate about the centering axis upon command of motor means for adjusting the distance of the rolling element from the centering axis. The centering device may be arranged between a bar feeder and a lathe, or between a lathe and a bar unloader, to keep a bar centered during processing and to limit the oscillation of the bar during its rotation.

### Brief description of the drawings

The invention can be better understood and implemented with reference to the attached drawings which illustrate a non-limiting example of implementation thereof:

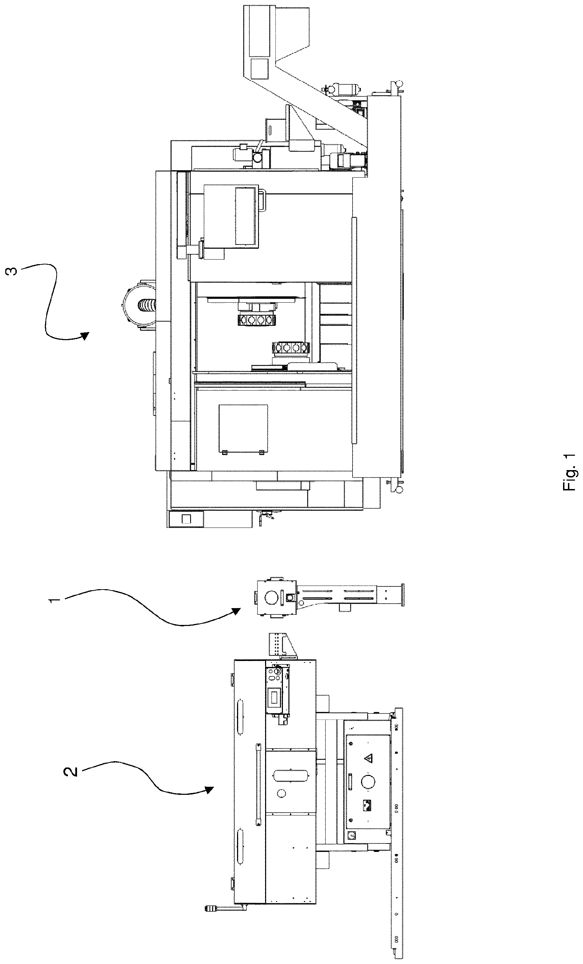

Figure 1 is a vertical elevational view of an example of a centering device made according to the invention and arranged between a bar feeder and a machine tool for machining the bars;
Figure 2 is a vertical elevation view of the centering device of Figure 1 with the device in a first configuration suitable for centering bars with a relatively large diameter;
Figure 3 is the view of Figure 2 with the device in a second configuration suitable for centering bars with a reduced diameter;
Figure 4 is a perspective view of the device in the first configuration of Figure 2 with an open door to better show some internal parts;
Figure 5 is the perspective view of Figure 4 with the device in the second configuration of Figure 3;
Figure 6 shows an enlarged detail of Figure 4;
Figure 7 shows an enlarged detail of Figure 5.

### Detailed description

Referring to the aforementioned figures, the reference numeral 1 designates as a whole a centering device which may be arranged, as in this example, between a bar feeder 2 and a machine tool 3 (in this case the machine tool 3 it is a lathe, in particular a fixed-head lathe). The centering device 1 may, in particular, serve to keep a bar centered, which is loaded into the machine tool 3 by the bar feeder 2 to perform a machining operation. The centering device 1 may serve, in particular, to contain the oscillation of the bar while the bar, during processing, is placed in rotation (about its longitudinal axis) by a spindle of the machine tool 3.

The centering device 1 may comprise, in particular, at least two guide assemblies (in the specific example, two guide assemblies) arranged axially spaced from one another along a centering axis. The centering axis of the centering device 1 may be coaxial with a supply axis of the bar feeder 2 and with a spindle axis of the machine tool 3.

Each guide assembly may comprise, in particular, at least three rolling members 4 (in the specific example, three rolling members) arranged around the centering axis at a given radial distance (in particular, the same radial distance for all rolling elements 4) from the centering axis.

Each rolling member 4 may be able to rotate (in an idle manner) around its own axis of rotation, in particular (as in this example) a rotation axis parallel to the centering axis. Each rolling element 4 may comprise, as in this example, a wheel designed for rolling contact with a cylindrical body (e.g. a bar adapter or a bar).

The rolling members 4 of each guide assembly may be able to perform a regulation movement, coordinated between all the rolling members 4, to vary their radial distance from the common centering axis with the possibility of assuming two or more adjustment configurations according to the diameter of the bar and/or the hollow support (adapter) that contains the bar.

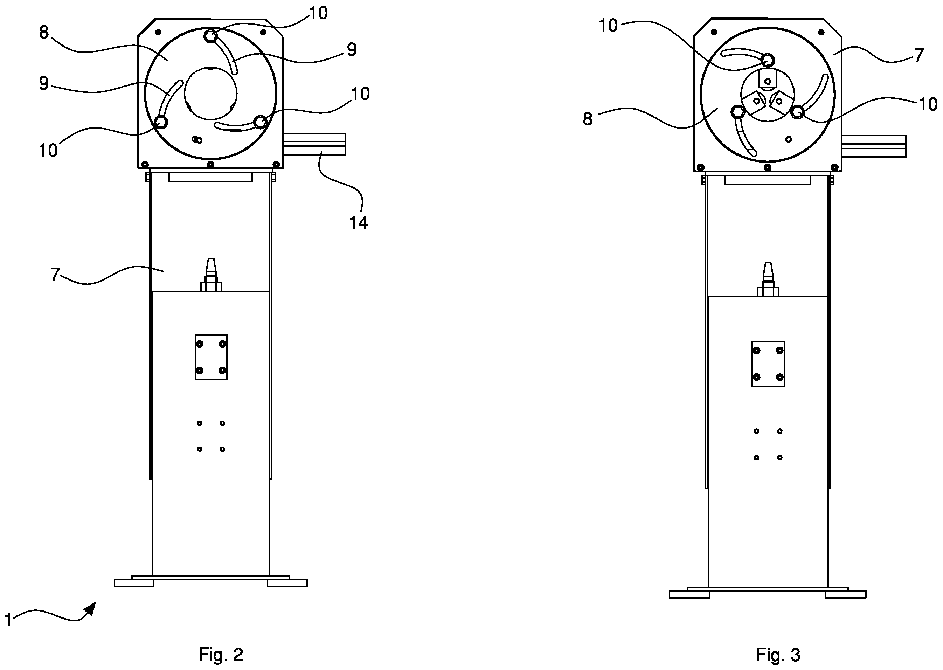

In particular, the rolling members 4 may assume at least one first configuration (for example a configuration of maximum diameter, such as the specific configuration shown in Figures 2, 4, 6), in which the rolling members 4 are arranged at a first radial distance (a relatively great distance) from the centering axis to rotatably support a first cylindrical body (a bar adapter and/or a bar of relatively large outside diameter, for example 100 mm), coaxially with the aforesaid centering axis.

In particular, the rolling members 4 may assume at least one second configuration (for example a configuration of minimum diameter, such as the specific configuration shown in Figures 3, 5, 7), in which the rolling members 4 are arranged at a second radial distance from the centering axis (a relatively small distance) different (in particular lesser) than the aforementioned first radial distance, to rotatably support a second cylindrical body (a bar adapter and/or a bar of relatively small diameter, e.g. 8 mm), with a different external diameter (for example smaller) than the first cylindrical body, coaxially with the centering axis.

In particular, the rolling members 4 may assume a multiplicity of configurations comprised between the first and the second configuration, according to the diameter of the bar to be machined.

The two guide assemblies may be, as in this example, coaxial with each other. The two guide assemblies may, in particular, be arranged at a certain axial distance from each other along the centering axis so as to be able to rotatably support a cylindrical body in collaboration (in particular, a bar or a bar adapter) and to keep the cylindrical body on its axis, particularly along the aforesaid centering axis. The two guide assemblies may cooperate, in particular, to rotatably support and keep the first cylindrical body or, selectively, the second cylindrical body centered on its axis. In particular, the two guide assemblies may support and maintain on the axis any cylindrical body (bar or bar adapter) with an external diameter between a maximum value (for example 100 mm) and a minimum value (for example 8 mm). In the specific example described herein, the two guide assemblies are substantially symmetrically arranged with respect to each other, according to a median plane of symmetry (vertical) perpendicular to the centering axis

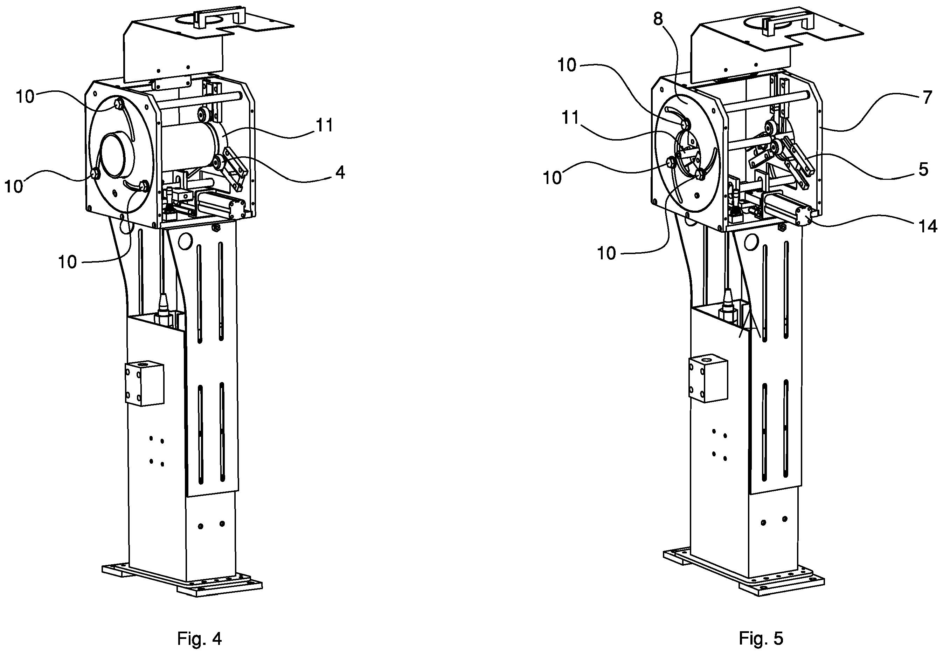

(horizontal). It is noted that in the perspective views, according to Figures 4 to 7, a guide assembly is visible from the outside while the other guide assembly is visible from the inside.

Each rolling member 4 may be supported, as in this example, by a slide 5 or carriage sliding on guide means 6 (integral with a frame 7 of the centering device 1). Each slide 5 may be sliding, in particular, with at least one sliding component in a radial direction with respect to the centering axis. Each slide 5 may be, as in this specific example, sliding with a linear sliding axis in a straight radial direction with respect to the centering axis.

The various rolling members 4 of each guide assembly may be arranged, in particular, circumferentially about the centering axis, for example in a regular manner, that is to say at the same angular distance from each other. In the specific case, in which each guide assembly comprises three rolling members 4, the rolling elements are arranged angularly spaced 120° from one another.

At least one guide assembly (in the specific case, each of the two guide assemblies) may comprise at least one adjustment body 8 which can rotate about the centering axis. The adjustment body 8 may be coupled to the rolling members 4 of the respective guide assembly by a mechanism configured in such a way that a rotation of the adjustment body 8 about the centering axis corresponds to a coordinated movement of the rolling members 4 between two different configurations with two respective different radial distances from the centering axis.

The mechanism may comprise, as in this specific example, at least three couplings (one for each rolling member 4) of the pin-groove type in which each coupling connects the rotatable adjustment body 8 with a respective rolling member 4. Each coupling may comprise, in particular, a groove 9 formed on the adjustment body 8 and a pin 10 integral with a respective rolling members 4 and sliding inside the respective groove 9. Each coupling may comprise, in particular, a groove 9 in the shape of curve that progressively moves away from the centering axis. This groove 9 may comprise, as in this example, a spiral-shaped groove wound around the centering axis.

Each of the two adjustment bodies 8 (one for each guide assembly) may comprise, in particular, a body with a circular peripheral edge, for example a circular disk, rotatably housed within a respective circular seat formed in the frame 7 of the centering device 1. Each circular seat may be made, in particular, in a plate-shaped portion of the frame 7.

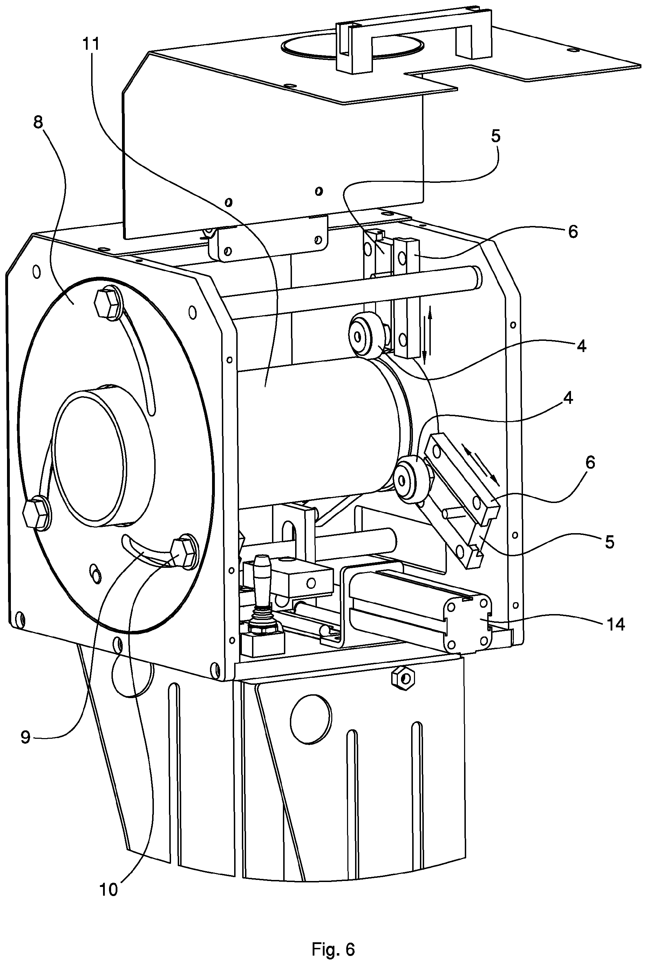

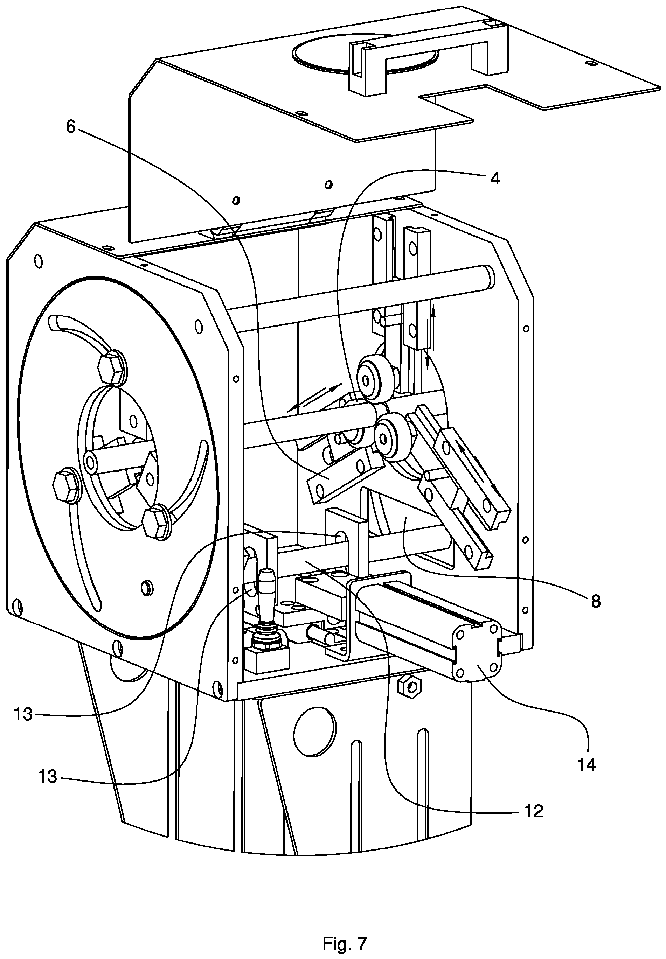

The centering device 1 may comprise, in particular, at least two hollow supports for bars (interchangeable adapters 11). Each hollow (cylindrical) support or adapter 11 may be selectively mountable in a coaxial position with the centering axis. Each adapter 11 may comprise, in particular, an outer cylindrical surface and an inner cylindrical sliding surface configured for an axial sliding of a cylindrical body (bar) having an external diameter equal to a diameter of the aforementioned internal cylindrical sliding surface. In Figures 4 and 6 an adapter 11 of a larger diameter is visible (for example for bars of 100 mm), while in Figures 5 and 7 an adapter 11 of a smaller diameter is visible (for example for bars of 8 mm). It may be provided that, during the preparation of the centering device 1, an operator coaxially inserts the adapter 11 of an appropriate diameter according to the diameter of the bar to be machined. Each bar adapter 11 may contain a bar and may, in particular, allow an axial sliding of the bar.

The centering device 1 may comprise, in particular, connection means for mechanically connecting two respective portions of the adjustment bodies 8 of the two guide assemblies to each other. Such portions of the adjustment bodies 8 may be, as in the example, eccentric, i.e. distant from the centering axis.

The connecting means may comprise, in particular, at least one cross member 12 which connects the aforementioned eccentric portions (away from the centering axis) with each other. The cross member 12 may be extended in length parallel to the centering axis. The connecting means may comprise at least one slot 13 within which the cross member 12 is sliding with a sliding axis. In the specific case, the connecting means comprises two slots 13 side by side, within which the cross member 12 runs. The axis of sliding of the cross member 12 (in the slot(s) 13) may be, as in this case, transverse to the centering axis.

The centering device 1 may comprise, in particular, motor means 14 configured to drive the movement of the rolling members 4 and to adjust their radial distance from the centering axis. In particular, the centering device 1 may comprise motor means 14 connected to the aforesaid connecting means for driving a movement of the connection means and consequently a rotation of the two adjustment bodies 8 (one for each guide assembly).

The aforesaid motor means 14 may comprise, in particular, a linear actuator, for example a linear actuator with a transverse (and non-coplanar) actuator axis with respect to the centering axis. The motor means 14 comprises, in this specific example, a fluid actuated linear actuator (a pneumatic cylinder), although it is possible to provide motor means of another type, for example an electric actuator.

The sliding axis of the cross member 12 (in the slot(s) 13) may be, as in this case, transverse to the aforesaid actuator axis.

Each slot 13 may be connected to a movable element of the motor means 14 (linear actuator), whereby a (linear) movement of the movable element of the motor means 14 may cause a (simultaneous) rotation of both the adjustment bodies 8. The rotation of the adjustment bodies 8 may in turn cause a (radial) displacement of the slides 5 along the guide means 6 (sliding guides) and the consequent variation of the radial distance of the rolling members 4 (carried by the slides 5) with respect to the centering axis. This occurs in this specific example due to the coupling between the grooves 9 on the adjustment bodies 8 and the pins 10 on the rolling members 4. The grooves 9 essentially have the function of cam profiles which guide the movement of the pins 10. It is possible, however, to provide for the use of a mechanism of another type to control the regulation movement of the rolling members 4.

The device described above allows automatic centering and practical and immediate adjustment according to the diameter of the bar. The centering device 1 relies, in particular, on the use of adapters 11 which are selectively positioned inside the device itself. Each bar adapter may contain the bar to be worked inside. Each bar adapter 11 may be inserted, in particular, into a central hole formed on the adjustment body 8. During the preparation of the centering device before processing, an operator can provide, if necessary, to change the adapter 11. This operation of change of the adapter 11 could be, substantially, the only manual phase performed by the operator.

Once the bar is fed towards the machine tool 3 by the bar feeder 2, before starting the processing, the step following the change of the adapter 11 may very easily comprise, starting from an open configuration of the rolling members 4 (at a great radial distance from the centering axis to allow the advancement of the bar), a command for activating the motor means 14 (pneumatic cylinder), which automatically closes on the adapter 11 and performs the centering of the bar, so that the bar is aligned with the axis of the machine tool 3 (lathe) and of the bar feeder 2. It is therefore possible to move to the processing step, in which the machine tool 3 makes the bar rotate around its longitudinal axis, while the centering device 1 rotatably supports the bar, by virtue of the rolling coupling between the cylindrical body (adapter 11 or directly the bar) and the rolling members 4, containing and limiting the oscillations due to the rotation.

The automatic centering step with adjustment of the diameter of the bar may provide, as seen, a rotation of the adjustment bodies 8 (in the form of flat bodies or disks) driven by the motor means 14. This rotation involves closing the guide assemblies (including rolling members 4) in contact around the adapter of the bar. The guide assemblies substantially perform the function of rolling support means which allow the rotation of the bar around its own longitudinal axis (aligned with the centering axis) and which also act for radial locking of the adapter and/or of the bar in at least three radial zones angularly spaced from one another.

In this specific case, the rolling members 4 configured for the rolling contact with the adapter are supported by elements (slides 5 or carriages) movable, in particular on sliding guides, to allow an adjustment movement when it is necessary to machine bars of different diameters.

The centering device 1 allows a simple and rapid preparation for changing the diameter of the bar. In particular, the times for changing the adapter 11 are relatively small and the operations to be performed are remarkably practical and immediate for the operator to perform.

In the specific example, the centering device 1 may be suitable for bars with diameters between 8 and 100 millimeters and with lengths between 200 and 1500 millimeters. It is however possible to use it for bars with larger and/or smaller diameters and longer and/or shorter lengths.

## Claims

1. A centering device (1) comprising at least two guide assemblies each comprising at least three rolling members (4) arranged around a centering axis at a radial distance from said centering axis, said at least three rolling members (4) of each guide assembly being capable of performing a coordinated movement to vary said radial distance with the possibility of assuming at least one first configuration, wherein said rolling members (4) are arranged at a first radial distance from said centering axis to support a first cylindrical body rotatably and coaxially with said centering axis, and at least one second configuration, wherein said rolling members (4) are arranged at a second radial distance from said centering axis other than said first radial distance to support a second cylindrical body, with an external diameter other than the first cylindrical body, rotatably and coaxially with said centering axis, said at least two guide assemblies being coaxial with each other and arranged at an axial distance from each other along said centering axis to be able to rotatably support in collaboration selectively, the first cylindrical body or the second cylindrical body, at least **two** of said guide assemblies comprising an adjustment body (8) which can rotate about said centering axis, said **each** adjustment body (8) being coupled to said at least three rolling members (4) **of the respective guide assembly** by means of a mechanism such that a rotation of said adjustment body (8) causes a displacement of said rolling members (4) between said first and second configurations, said centering device comprising connecting means for mechanically connecting two respective portions of the adjustment bodies (8) of two guide assemblies, said portions being distant from said centering axis, said centering device comprising motor means (14) connected to said connecting means to actuate a movement of said connecting means and consequently a rotation of the adjustment bodies (8) of said guide assemblies.

2. A device as claimed in claim 1, comprising at least one slider (5) supporting a respective rolling member (4) for each of said rolling members (4) and sliding with at least one sliding component in a radial direction with respect to said centering axis.

3. A device as claimed in claim 2, wherein each slider (5) is slidable with a respective linear sliding axis having a radial direction with respect to said centering axis.

4. A device as claimed in any one of the preceding claims, wherein, for each of said at least two guide assemblies, said at least three rolling members (4) are arranged circumferentially around said centering axis with a regular arrangement at the same angular distance one from the other.

5. A device as claimed in any one of the preceding claims, wherein said mechanism comprises at least three couplings of pin-groove type in which each coupling connects said adjustment body (8) to a respective rolling member (4).

6. A device as claimed in claim 5, wherein each of said couplings comprises a groove (9) formed on said adjustment body (8) and a pin (10) which is secured to a respective rolling member (4) and which is slidable within said groove (9).

7. A device as claimed in claim 5 or 6, wherein each of said couplings comprises a curved groove (9) which progressively extends away from said centering axis.

8. A device as claimed in claim 7, wherein said groove is a spiral groove (9) wound around said centering axis.

9. A device as claimed in any one of the preceding claims, wherein said adjustment body (8) comprises a circular disk rotatably housed within a circular seat formed in a frame (7) of said device.

10. A device as claimed in any one of the preceding claims, wherein said motor means (14) comprises a linear actuator with an actuator axis transverse to said centering axis.

11. A device as claimed in any one of the preceding claims, wherein said connecting means comprises at least one cross member (12) connecting said portions of the adjustment bodies (8) distant from said centering axis, said cross member (12) extending in length parallel to said centering axis.

12. A device as claimed in claims 11 and 10, wherein said connecting means comprises at least one slot (13) within which said cross member (12) is slidable with a sliding axis that is transverse to both said centering axis and said actuator axis, said slot (13) being connected to said actuator whereby a movement of said actuator causes rotation of said adjustment bodies (8).

13. A device as claimed in any one of the preceding claims, comprising at least two hollow supports (11) each of which can be selectively mounted on said centering device in a coaxial position with said centering axis,

14. A device as claimed in claim 13, wherein each hollow support (11) comprises an inner cylindrical sliding surface configured for an axial sliding of a cylindrical body having an outer diameter substantially equal to an inner diameter of said inner cylindrical sliding surface.

15. A combination of a centering device (1) as claimed in any one of the preceding claims with a bar feeder (2) suitable for feeding bars to a machine tool (3) and/or a bar unloader suitable for unloading bars from a machine tool (3), wherein said centering device (1) and said bar feeder (2) and/or said bar unloader include bar alignment axes which can be aligned one to the other.

## Patentansprüche

1. Zentriervorrichtung (1), mit zumindest zwei Führungseinheiten, die jeweils zumindest drei Rollenorgane (4) aufweisen, die um eine Zentrierachse in einem radialen Abstand von der Zentrierachse herum angeordnet sind, wobei die zumindest zwei Rollenorgane (4) jeder Führungseinheit in der Lage sind, eine koordinierte Bewegung auszuführen, um den radialen Abstand zu variieren, mit der Möglichkeit, zumindest eine erste Konfiguration, wobei die Rollenorgane (4) in einem ersten radialen Abstand von der Zentrierachse angeordnet sind, um einen ersten zylindrischen Körper drehbar und koaxial zur Zentrierachse zu stützen, und zumindest eine zweite Konfiguration anzunehmen, wobei die Rollenorgane (4) in einem zweiten radialen Abstand von der Zentrierachse angeordnet sind, der von dem ersten radialen Abstand verschieden ist, um einen zweiten zylindrischen Körper, der einen Außendurchmesser aufweist, der von dem ersten zylindrischen Körper verschieden ist, drehbar und koaxial zur Zentrierachse zu stützen, wobei die zumindest zwei Führungseinheiten koaxial zueinander sind und in einem axialen Abstand voneinander entlang der Zentrierachse angeordnet sind, um im Zusammenspiel wahlweise den ersten zylindrischen Körper oder den zweiten zylindrischen Körper drehbar zu stützen, wobei zumindest zwei der Führungseinheiten einen Einstellkörper (8) aufweisen, der sich um die Zentrierachse drehen kann, wobei jeder Einstellkörper (8) mit den zumindest drei Rollenorganen der jeweiligen Führungseinheit mittels eines Mechanismus gekoppelt ist, derart, dass eine Drehung des Einstellkörpers (8) eine Verlagerung der Rollenorgane (4) zwischen den ersten und zweiten Konfigurationen bewirkt, wobei die Zentriervorrichtung Verbindungsmittel zum mechanischen Verbinden zweier jeweiliger Abschnitte der Einstellkörper (8) der zwei Führungseinheiten aufweist, wobei die genannten Abschnitte von der Zentrierachse beabstandet sind, wobei die Zentriervorrichtung Motormittel (14) aufweist, die mit den Verbindungsmitteln verbunden sind, um eine Bewegung der Verbindungsmittel und folglich eine Drehung der Einstellkörper (8) der Führungseinheiten zu aktuieren.

2. Vorrichtung nach Anspruch 1, mit zumindest einem Schieber (5) für jedes der Rollenorgane (4), der ein jeweiliges Rollenorgan (4) stützt und mit zumindest einer Verschiebekomponente in einer radialen Richtung bezüglich der Zentrierachse verschiebbar ist.

3. Vorrichtung nach Anspruch 2, wobei jeder Schieber (5) mit einer jeweiligen linearen Verschiebeachse, die eine radiale Richtung bezüglich der Zentrierachse aufweist, verschiebbar ist.

4. Vorrichtung nach irgendeinem der vorhergehenden Ansprüche, wobei für jede der zumindest zwei Führungseinheiten die zumindest drei Rollenorgane (4) umfänglich um die Zentrierachse herum mit einer gleichmäßigen Anordnung in demselben Winkelabstand voneinander angeordnet sind.

5. Vorrichtung nach irgendeinem der vorhergehenden Ansprüche, wobei der Mechanismus zumindest drei Kupplungen vom Stift-Nut-Typ aufweist, wobei jede Kupplung den Einstellkörper (8) mit einem jeweiligen Rollenorgan (4) verbindet.

6. Vorrichtung nach Anspruch 5, wobei jede der Kupplungen eine Nut (9), die an dem Einstellkörper (8) gebildet ist, und einen Stift (10) aufweist, der an einem jeweiligen Rollenorgan (4) gesichert und innerhalb der Nut (9) verschiebbar ist.

7. Vorrichtung nach Anspruch 5 oder 6, wobei jede der Kupplungen eine gekrümmte Nut (9) aufweist, die sich fortschreitend von der Zentrierachse weg erstreckt.

8. Vorrichtung nach Anspruch 7, wobei die Nut eine Spiralnut (9) ist, die um die Zentrierachse gewunden ist.

9. Vorrichtung nach irgendeinem der vorhergehenden Ansprüche, wobei der Einstellkörper (8) eine kreisförmige Scheibe aufweist, die drehbar in einem kreisförmigen Sitz, der in einem Rahmen (7) der Vorrichtung gebildet ist, eingehäust ist.

10. Vorrichtung nach irgendeinem der vorhergehenden Ansprüche, wobei die Motormittel (14) einen Linearaktuator mit einer Aktuatorachse quer zu der Zentrierachse aufweisen.

11. Vorrichtung nach irgendeinem der vorhergehenden Ansprüche, wobei die Verbindungsmittel zumindest einen Querträger (12) aufweisen, der die Abschnitte der Einstellkörper (8), die von der Zentrierachse beabstandet sind, verbindet, wobei der Querträger (12) längsweise parallel zu der Zentrierachse erstreckt.

12. Vorrichtung nach Anspruch 11 und 10, wobei die Verbindungsmittel zumindest einen Schlitz (13) aufweisen, in dem der Querträger (12) mit einer Verschiebeachse verschiebbar ist, die quer sowohl zu der Zentrierachse als auch zu der Aktuatorachse verläuft, wobei der Schlitz (13) mit dem Aktuator verbunden ist, wodurch eine Bewegung des Aktuators eine Drehung der Einstellkörper (8) bewirkt.

13. Vorrichtung nach irgendeinem der vorhergehenden Ansprüche, mit zumindest zwei hohlen Stützen (11), von denen jede wahlweise an der Zentriervorrichtung in einer zur Zentrierachse koaxialen Position montiert werden kann.

14. Vorrichtung nach Anspruch 13, wobei jede hohle Stütze (11) eine innere zylindrische Verschiebefläche aufweist, die zum axialen Verschieben eines zylindrischen Körpers ausgebildet ist, der einen Außendurchmesser aufweist, der im Wesentlichen gleich einem Innendurchmesser der inneren zylindrischen Verschiebefläche ist.

15. Kombination einer Zentriervorrichtung (1) gemäß irgendeinem der vorhergehenden Ansprüche mit einem Stangenzuführer (2), der zum Zuführen von Stangen zu einer Werkzeugmaschine (3) geeignet ist, und/oder einem Stangenentlader, der zum Entladen von Stangen von einer Werkzeugmaschine (3) geeignet ist, wobei die Zentriervorrichtung (1) und der Stangenzuführer (2) und/oder der Stangenentlader Stangenausrichtachsen umfassen, die zueinander ausgerichtet werden können.

## Revendications

1. Dispositif de centrage (1) comprenant au moins deux assemblages guides comprenant chacun au moins trois organes de roulement (4) arrangés autour d'un axe de centrage à une distance radiale dudit axe de centrage, lesdits au moins trois organes de roulement (4) de chaque assemblage guide étant aptes à décrire un mouvement coordonné pour varier ladite distance radiale avec la possibilité d'adopter au moins une première configuration, dans laquelle lesdits organes de roulement (4) sont arrangés à une première distance radiale dudit axe de centrage pour supporter un premier corps cylindrique de manière rotative et coaxialement avec ledit axe de centrage, et au moins une deuxième configuration, dans laquelle lesdits organes de roulement (4) sont arrangés à une deuxième distance radiale dudit axe de centrage autre que ladite première distance radiale, pour supporter un deuxième corps cylindrique, avec un diamètre externe autre que le premier corps cylindrique, de manière rotative et coaxialement avec ledit axe de centrage, lesdits au moins deux assemblages guides étant coaxiaux l'un avec l'autre et arrangés à une distance axiale l'un de l'autre le long dudit axe de centrage pour pouvoir supporter de manière rotative en collaboration sélectivement le premier corps cylindrique ou le deuxième corps cylindrique, au moins deux desdits assemblages guides comprenant un corps d'ajustement (8) qui peut tourner autour dudit axe de centrage, chaque corps d'ajustement (8) étant couplé auxdits au moins trois organes de roulement (4) de l'assemblage guide respectif à l'aide d'un mécanisme de telle sorte qu'une rotation dudit corps d'ajustement (8) cause un déplacement desdits organes de roulement (4) entre lesdites première et deuxième configurations, ledit dispositif de centrage comprenant des moyens de liaison pour relier mécaniquement deux parties respectives des corps d'ajustement (8) de deux assemblages guides, lesdites parties étant distantes dudit axe de centrage, ledit dispositif de centrage comprenant des moyens à moteur (14) reliés auxdits moyens de liaison pour actionner un mouvement desdits moyens de liaison et en conséquence une rotation des corps d'ajustement (8) desdits assemblages guides.

2. Dispositif comme revendiqué dans la revendication 1, comprenant au moins un coulisseau (5) supportant un organe de roulement respectif (4) pour chacun desdits organes de roulement (4) et coulissant avec au moins un composant de coulissement dans une direction radiale par rapport audit axe de centrage.

3. Dispositif comme revendiqué dans la revendication 2, dans lequel chaque coulisseau (5) est apte à coulisser avec un axe de coulissement linéaire respectif ayant une direction radiale par rapport audit axe de centrage.

4. Dispositif comme revendiqué dans l'une quelconque des revendications précédentes, dans lequel, pour chacun desdits au moins deux assemblages guides, lesdits au moins trois organes de roulement (4) sont arrangés circonférentiellement autour dudit axe de centrage avec un arrangement régulier à la même distance angulaire les uns des autres.

5. Dispositif comme revendiqué dans l'une quelconque des revendications précédentes, dans lequel ledit mécanisme comprend au moins trois couplages du type à broche et rainure dans lequel chaque couplage relie ledit corps d'ajustement (8) à un organe de roulement respectif (4).

6. Dispositif comme revendiqué dans la revendication 5, dans lequel chacun desdits couplages comprend une rainure (9) formée sur ledit corps d'ajustement (8) et une broche (10) qui est fixée à un organe de roulement respectif (4) et qui est apte à coulisser à l'intérieur de ladite rainure (9).

7. Dispositif comme revendiqué dans la revendication 5 ou 6, dans lequel chacun desdits couplages comprend une rainure courbe (9) qui s'éloigne progressivement dudit axe de centrage.

8. Dispositif comme revendiqué dans la revendication 7, dans lequel ladite rainure est une rainure en spirale (9) enroulée autour dudit axe de centrage.

9. Dispositif comme revendiqué dans l'une quelconque des revendications précédentes, dans lequel ledit corps d'ajustement (8) comprend un disque circulaire logé de manière rotative à l'intérieur d'un siège circulaire formé dans un châssis (7) dudit dispositif.

10. Dispositif comme revendiqué dans l'une quelconque des revendications précédentes, dans lequel lesdits moyens à moteur (14) comprennent un actionneur linéaire avec un axe d'actionneur transversal par rapport audit axe de centrage.

11. Dispositif comme revendiqué dans l'une quelconque des revendications précédentes, dans lequel lesdits moyens de liaison comprennent au moins une traverse (12) reliant lesdites parties des corps d'ajustement (8) distantes dudit axe de centrage, ladite traverse (12) s'étendant en longueur parallèlement audit axe de centrage.

12. Dispositif comme revendiqué dans les revendications 11 et 10, dans lequel lesdits moyens de liaison comprennent au moins une fente (13) à l'intérieur de laquelle ladite traverse (12) est apte à coulisser avec un axe de coulissement qui est transversal par rapport à la fois audit axe de centrage et audit axe d'actionneur, ladite fente (13) étant reliée audit actionneur, moyennant quoi un mouvement dudit actionneur cause une rotation desdits corps d'ajustement (8).

13. Dispositif comme revendiqué dans l'une quelconque des revendications précédentes, comprenant au moins deux supports creux (11) pouvant chacun être monté sélectivement sur ledit dispositif de centrage dans une position coaxiale avec ledit axe de centrage.

14. Dispositif comme revendiqué dans la revendication 13, dans lequel chaque support creux (11) comprend une surface de coulissement cylindrique intérieure configurée pour un coulissement axial d'un corps cylindrique ayant un diamètre extérieur sensiblement égal à un diamètre intérieur de ladite surface de coulissement cylindrique intérieure.

15. Combinaison d'un dispositif de centrage (1) comme revendiqué dans l'une quelconque des revendications précédentes avec un distributeur de barres (2) approprié pour distribuer des barres à une machine-outil (3) et/ou un déchargeur de barres approprié pour décharger des barres d'une machine-outil (3), dans lequel ledit dispositif de centrage (1) et ledit distributeur de barres (2) et/ou ledit déchargeur de barres incluent des axes d'alignement de barres qui peuvent être alignés l'un par rapport à l'autre.
